# EUROPÄISCHE PATENTSCHRIFT

(11) **EP 2 063 107 B1**
(45) Veröffentlichungstag und Bekanntmachung des Hinweises auf die Patenterteilung: **16.08.2017**
(21) Anmeldenummer: 08016400.7
(22) Anmeldetag: 17.09.2008
(51) Int. Cl.: F03D 7/00, F03D 7/04, G06F 9/44

(54) **Verfahren und Anordnung zum Feststellen der Kompatibilität einer Steuerungssoftware mit einer Windenergieanlage**
Method and system for detecting the compatibility of a piece of control software with a wind energy plant
Procédé et agencement destinés à la détermination de la compatibilité d'un logiciel de commande et d'une éolienne

(30) Priorität: 21.09.2007 DE 102007045070
(43) Veröffentlichungstag der Anmeldung: 27.05.2009
(73) Patentinhaber: Senvion GmbH, 22297 Hamburg (DE)
(72) Erfinder: Altemark, Jens, 24768 Rendsburg (DE); Book, Markus, 24118 Kiel (DE); Kupper, Anton, 25746 Heide (DE)
(74) Vertreter: Glawe, Delfs, Moll

(56) Entgegenhaltungen:
- US-A- 6 035 423
- US-A1- 2005 090 937
- SVENSSON AND P KARLSSON J: "Wind Farm Control Software Structure", INTERNATIONAL WORKSHOP ON TRANSMISSION NETWORKS FOR OFFSHORE WIND FARMS, XX, XX, 1. April 2002 (2002-04-01), Seiten 1-15, XP002254250,

## Beschreibung

Die Erfindung betrifft ein Verfahren und eine Anordnung zum Feststellen der Kompatibilität einer für Standardparameter ausgelegten Steuerungssoftware mit einer mit Betriebsparametern betriebenen Windenergieanlage. Windenergieanlagen werden mit einer Steuerungssoftware betrieben, die das Zusammenspiel der Komponenten innerhalb der Windenergieanlage sowie das Zusammenspiel der Windenergieanlage mit dem Anschlussnetz steuert. Die Steuerungssoftware muss die Randbedingungen beachten, unter denen die Windenergieanlage arbeitet. Es muss berücksichtigt werden, mit welchen Komponenten die Windenergieanlage ausgestattet ist, welche Spannungen zulässig sind, mit welchen Leistungen die Windenergieanlage betrieben werden darf, welche Eigenfrequenz der Turm der Windenergieanlage hat, in welcher Betriebsart der Schallausstoß der Windenergieanlage am geringsten ist und so weiter. Alle diese Randbedingungen sind durch Betriebsparameter der Windenergieanlage definiert. Die Betriebsparameter werden von der Steuerungssoftware berücksichtigt.

Von Zeit zu Zeit wird die Steuerungssoftware einer Windenergieanlage durch eine neue Version der Steuerungssoftware ersetzt. Nach klassischem Ablauf steuert eine Bedienperson von einer Leitstelle aus die einzelnen Windenergieanlagen nacheinander über eine Datenleitung an, überträgt die neue Version der Software zu jeder einzelnen Windenergieanlage und installiert die Software durch manuell eingegebene Befehle. Das Erneuern der Software nimmt bei jeder Windenergieanlage etwa 1,5 Stunden in Anspruch. Durch die von der Bedienperson aufgewendete Zeit und den Stillstand der Windenergieanlage entstehen erhebliche Kosten.

Aus EP 1 788 478 A2 ist ein Verfahren zum automatischen Erneuern der Steuerungssoftware einer Mehrzahl von Windenergieanlagen bekannt. Die neue Version der Steuerungssoftware wird dort einmal von einer Leitstelle aus zu einem Parkmaster übertragen, an den eine Mehrzahl von Windenergieanlagen angeschlossen ist. Der Parkmaster steuert die einzelnen Windenergieanlagen nacheinander an und überträgt die neue Version der Steuerungssoftware zu den Windenergieanlagen. Auf diese Weise wird die zwischen der Leitstelle und dem Parkmaster übertragene Datenmenge reduziert. Dies bringt eine erhebliche Zeitersparnis, da die Datenleitung zwischen der Leitstelle und dem Parkmaster in vielen Fällen nur für eine geringe Übertragungsrate ausgelegt ist.

Das Verfahren gemäß EP 1 788 478 A2 zeigt seine Vorzüge dann, wenn alle an den Parkmaster angeschlossenen Windenergieanlagen mit identischen Betriebsparametern betrieben werden. Die Steuerungssoftware kann dann für die betreffenden Betriebsparameter ausgelegt sein und nacheinander ohne weitere Anpassungen auf die einzelnen Windenergieanlagen aufgespielt werden.

Die Voraussetzung, dass alle an den Parkmaster angeschlossenen Windenergieanlagen mit denselben Betriebsparametern betrieben werden, ist jedoch nicht immer gegeben. Dies gilt auch dann, wenn die Windenergieanlagen grundsätzlich vom gleichen Bautyp sind. Beispielsweise können sich die windenergieanlagen in ihren Komponenten unterscheiden, wie etwa den Generatoren oder den Getrieben. Eine auf der Kuppe eines Hügels angeordnete Windenergieanlage kann mit einer anderen Gefahrbefeuerung ausgestattet sein als eine am Hang angeordnete Windenergieanlage. Variationen dieser Art können dazu führen, dass sich die Betriebsparameter der Windenergieanlage unterscheiden. Es kann sein, dass an der neuen Version der Steuerungssoftware Anpassungen erforderlich sind, damit sie bei einer Windenergieanlage mit abweichenden Betriebsparametern verwendet werden kann.

In dem Verfahren gemäß EP 1 788 478 A2 müssen die Windenergieanlagen, die mit abweichenden Betriebsparametern betrieben werden, manuell ausgesondert werden. Der Parkmaster muss angewiesen werden, diese Windenergieanlagen beim automatischen Erneuern der Steuerungssoftware zu überspringen. Dies ist umständlich und birgt ein hohes Potential für Fehler, da möglicherweise nicht alle abweichenden Windenergieanlagen erkannt werden.

Zu Problemen mit der Kompatibilität der Steuerungssoftware kann es nicht nur dann kommen, wenn die Steuerungssoftware erneuert wird, sondern auch dann, wenn zwar die Steuerungssoftware erhalten bleibt, sich jedoch die Betriebsparameter der Windenergieanlage ändern. Die Betriebsparameter einer Windenergieanlage können sich beispielsweise dann ändern, wenn ein Mechaniker die Windenergieanlage wartet und dabei Einstellungen vornimmt, die sich auf die Betriebsparameter auswirken. Bislang muss der Mechaniker aufwändig von Hand prüfen, ob die geänderten Einstellungen zu Problemen in Hinblick auf die Kompatibilität der Steuerungssoftware führen.

Der Erfindung liegt ausgehend vom eingangs beschriebenen Stand der Technik die Aufgabe zu Grunde, ein Verfahren und eine Anordnung zum Feststellen der Kompatibilität einer Steuerungssoftware mit einer Windenergieanlage vorzustellen, die die Abläufe beim Erneuern der Steuerungssoftware sowie beim Warten von Windenergieanlagen erleichtern. Die Aufgabe wird gelöst durch die Merkmale der unabhängigen Ansprüche. Vorteilhafte Ausführungsformen finden sich in den Unteransprüchen.

Das erfindungsgemäße Verfahren ist ein automatisches Verfahren, das die folgenden Schritte umfasst:
a. Übertragen der Betriebsparameter der Windenergieanlage zu einer Recheneinheit;
b. Übertragen der Standardparameter zu einer Recheneinheit;
c. Feststellen von Abweichungen zwischen den Betriebsparametern und den Standardparametern durch die Recheneinheit;
d. Entscheiden über die Kompatibilität anhand der Abweichungen;

Zunächst werden einige Begriffe erläutert. Ein Betriebsparameter einer Windenergieanlage ist jeder Parameter, der eine Eigenschaft einer Windenergieanlage in einer Form repräsentiert, die eine Verarbeitung durch eine Steuerungssoftware ermöglicht. Die Betriebsparameter umfassen Konstanten, Kennlinien, mathematische Funktionen, Wertetabellen, Seriennummern oder Typidentifikationen der Windenergieanlage oder ihrer Komponenten.

Wenn eine Steuerungssoftware Parameter verarbeitet, so müssen die Parameter vorbestimmte Werte haben oder innerhalb vorbestimmter Bereiche liegen, damit die Steuerungssoftware in der vorgesehenen Weise arbeitet. Beim Erstellen der Steuerungssoftware wird angegeben, für welche Standardparameter die Steuerungssoftware bestimmt ist, welches also die Standardparameter der Steuerungssoftware sind. Arbeitet eine Steuerungssoftware mit Parametern, die nicht Standardparameter sind, so kann dies je nach Schwere der Abweichungen zu einem fehlerhaften Betrieb der Windenergieanlage führen.

Das erfindungsgemäße Verfahren hat den Vorteil, dass es den Aufwand und damit die Kosten gering hält. Mit den Standardparametern und den Betriebsparametern müssen nur geringe Datenmengen zu der Recheneinheit übertragen werden. Das Feststellen von Abweichungen zwischen den Betriebsparametern und den Standardparametern kann von der Recheneinheit in einer standardisierten Prozedur durchgeführt werden. Eine Mehrzahl von bislang manuell durchgeführten Schritten wird durch das erfindungsgemäße Verfahren eingespart. Die Gefahr von unter Umständen schwerwiegenden Fehlern des Bedienpersonals wird vermindert.

Damit eine automatische Durchführung der Kompatibilitätsprüfung beispielsweise durch ein Logikmodul möglich ist, müssen Kriterien vorgegeben sein, anhand derer über die Kompatibilität entschieden wird. Im einfachsten Fall ist das Ergebnis der Kompatibilitätsprüfung nur dann positiv, wenn alle Betriebsparameter zu den Standardparametern passen. Jede Abweichung führt zu einem negativen Ergebnis der Kompatibilitätsprüfung. Es gibt Fälle, in denen die Steuerungssoftware trotz einer Abweichung zwischen den Betriebsparametern und Standardparametern mit der Windenergieanlage kompatibel ist. Die Effizienz des erfindungsgemäßen Verfahrens wird verbessert, wenn Kriterien vorgegeben werden, anhand derer automatisch entschieden werden kann, ob trotz einer Abweichung noch Kompatibilität gegeben ist. Solche Kriterien können in Form von Kompatibilitätsklassen, die den Standardparametern zugeordnet werden, vorgegeben werden. Anhand der Kompatibilitätsklassen kann entsprechend der Schwere der Abweichung differenziert reagiert werden.

Beispielsweise können den Standardparametern vier Kompatibilitätsklassen zugeordnet sein: In der ersten Kompatibilitätsklasse wird die Steuerungssoftware trotz einer Abweichung ohne Rückfrage aufgespielt. In der zweiten Kompatibilitätsklasse wird die Steuersoftware ebenfalls ohne Rückfrage aufgespielt, es erfolgt jedoch eine Meldung an eine Leitstelle. In der dritten Kompatibilitätsklasse führt eine Abweichung dazu, dass die Steuerungssoftware nur nach einem ausdrücklichen Befehl der Leitstelle aufgespielt werden kann. In der vierten Kompatibilitätsklasse ist die Steuerungssoftware bei einer Abweichung nicht kompatibel.

Das Verfahren kann bei einer Version der Steuerungssoftware angewendet werden, mit der die Windenergieanlage zuvor bereits betrieben wurde, also bei einer aktiven Version der Steuerungssoftware. Dies kommt etwa dann in Betracht, wenn sich die Betriebsparameter einer Windenergieanlage nach Wartungsarbeiten geändert haben. Ein anderer Anlass für eine Kompatibilitätsprüfung nach dem erfindungsgemäßen Verfahren kann es sein, dass die Windenergieanlage erstmalig mit einer neuen Version der Steuerungssoftware in Betrieb genommen werden soll. In beiden Fällen wird eine Vielzahl von Schritten eingespart, die bislang manuell durchgeführt werden.

Es können mehrere Versionen der neuen Software vorgesehen sein. Das Logikmodul kann dann anhand der Betriebsparameter eine Version der neuen Software auswählen, bei der die Standardparameter und die Betriebsparameter zusammenpassen.

Die Steuerungssoftware kann so ausgelegt sein, dass einzelne oder alle Standardparameter einen exakt bestimmten Wert haben müssen. So kann es beispielsweise sein, dass eine Steuerungssoftware nur mit einem bestimmten Typ von Transformator oder einem bestimmten Typ von Umrichter zusammenarbeiten kann. Ebenfalls möglich ist es, dass es für die Steuerungssoftware ausreichend ist, wenn die Betriebsparameter innerhalb bestimmter Bereiche liegen. Dies kann etwa für die in den Komponenten der Windenergieanlage maximal zulässige Spannung gelten. Die Standardparameter umfassen dann Parameterbereiche.

Es kann vorkommen, dass verschiedene Betriebsparameter der Windenergieanlage im Steuerungsprogramm eine Abhängigkeit voneinander haben. So kann etwa in einem ersten Getriebetyp eine bestimmte Temperatur noch zulässig sein, während bei einem zweiten Getriebetyp der Grenzwert der zulässigen Temperatur bereits überschritten ist. Solchen Abhängigkeiten kann dadurch Rechnung getragen werden, dass die Standardparameter durch eine Standardparametermatrix repräsentiert sind.

Das erfindungsgemäße Verfahren zum Feststellen der Kompatibilität der Steuerungssoftware kann Element eines Verfahrens sein, mit dem die Steuerungssoftware einer Windenergieanlage erneuert wird. Es wird dann bei positivem Ergebnis der Kompatibilitätsprüfung eine neue Version der Steuerungssoftware zu der Windenergieanlage übertragen und die Windenergieanlage wird mit der übertragenen Steuerungssoftware in Betrieb genommen. Das Verfahren zum Erneuern der Steuerungssoftware kann automatisch durchgeführt werden. Bei einer positiven Entscheidung über die Kompatibilität wird dann ein Signal an eine Kontrolleinheit übermittelt, gemäß dem das Übertragen der Steuerungssoftware automatisch in Gang gesetzt wird.

Während des Übertragens der Steuerungssoftware zu der Windenergieanlage kann die Windenergieanlage außer Betrieb gesetzt werden. Zwingend ist dies jedoch nicht, vielmehr kann die Windenergieanlage währenddessen auch noch mit der alten Version der Steuerungssoftware weiterbetrieben werden.

In einer vorteilhaften Ausführungsform wird die Windenergieanlage auch dann nicht außer Betrieb gesetzt, wenn die Steuerungssoftware auf der Windenergieanlage installiert wird und wenn die Steuereinheit der Windenergieanlage von der alten Version der Steuerungssoftware auf die neue Version der Steuerungssoftware umgeschaltet wird. Dazu wird die neue Version der Software zunächst in einem passiven Speicherbereich der Steuereinheit installiert. Ist die Installation im passiven Speicherbereich vollendet, so kann die Steuereinheit mittels eines Umschaltmoduls instantan so umgeschaltet werden, dass der passive Speicherbereich zum aktiven Speicherbereich wird, ohne dass die Windenergieanlage außer Betrieb gesetzt werden muss. Gegebenenfalls kann eine separate Sicherheitseinrichtung vorgesehen sein, die die Windenergieanlage während des Umschaltens und nach dem Umschalten überprüft und die die Steuereinheit wieder zum vormals aktiven Speicherbereich zurückschaltet, wenn sie Unregelmäßigkeiten beim Betrieb mit der neuen Version der Steuerungssoftware feststellt. Sind die Unregelmäßigkeiten derart, dass sie auch durch ein Zurückschalten auf die alte Version der Steuerungssoftware nicht behoben werden können, so kann die Sicherheitseinrichtung einen Notstopp der Windenergieanlage in die Wege leiten. Das Umschaltmodul kann so ausgelegt sein, dass es zum Umschalten der Steuereinheit vom einen auf den anderen Speicherbereich einen Zeitpunkt auswählt, zu dem sich die Windenergieanlage in einem stabilen Betriebszustand befindet. Es wird beispielsweise dann nicht zwischen den beiden Speicherbereichen umschalten, wenn die Windenergieanlage gerade hohen Windgeschwindigkeiten ausgesetzt ist und Fehler durch das Umschalten der Steuerungssoftware zu einer Überlastung der Windenergieanlage führen könnten. Vorteilhafterweise findet das Umschalten der Steuerungssoftware daher unterhalb einer vorgegebenen Windgeschwindigkeit, z.B. unterhalb der Einschaltgeschwindigkeit statt. Das Umschalten der Steuerungssoftware kann auch davon abhängig gemacht werden, dass andere Umgebungswerte innerhalb vorgegebener Grenzen liegen. Alternativ kann die Umstellung der Software automatisiert verzögert werden, bis die Windenergieanlage etwa wegen einer Flaute oder wegen eines Fehlers im elektrischen Netz keine Energie in das Anschlussnetz einspeist. Ein zusätzlicher Ausfall in der Energieerzeugung oder dem Betrieb der Windenergieanlage kann auf diese Weise vermieden werden. Der Gedanke, die Windenergieanlage während des Umschaltens auf die neue Version der Software in Betrieb zu halten, verdient gegebenenfalls unabhängig davon Schutz, ob die Kompatibilität der Steuerungssoftware mit den Betriebsparametern geprüft wurde. Dies gilt sowohl für ein entsprechendes Verfahren als auch für eine Windenergieanlage mit den zur Durchführung des Verfahrens dienlichen Komponenten.

Das erfindungsgemäße Verfahren zum Feststellen der Kompatibilität der Steuerungssoftware kann auch Element eines Verfahrens sein, mit dem die Steuerungssoftware einer Mehrzahl von Windenergieanlagen erneuert wird. Die Standardparameter einer neuen Version der Steuerungssoftware werden dann zu einem Parkmaster übertragen, an den eine Mehrzahl von Windenergieanlagen angeschlossen ist. Als Parkmaster wird jede Einrichtung bezeichnet, die Leitungsaufgaben für eine Mehrzahl von Windenergieanlagen übernimmt. Die Kompatibilität der Steuerungssoftware wird dann nacheinander oder auch parallel für die einzelnen Windenergieanlagen geprüft, wobei der Parkmaster die Windenergieanlagen zu diesem Zweck ansteuert. Bei positivem Ergebnis der Kompatibilitätsprüfung wird die neue Version der Steuerungssoftware durch den Parkmaster zu den Windenergieanlagen übertragen. Anschließend werden die Windenergieanlagen mit der neuen Version der Steuerungssoftware in Betrieb genommen.

Die Erfindung betrifft ferner eine Anordnung, mit der die Kompatibilität einer für Standardparameter ausgelegten Steuerungssoftware mit einer mit Betriebsparametern betriebenen Windenergieanlage festgestellt werden kann. Die Anordnung umfasst eine Recheneinheit, mit der Abweichungen zwischen den Betriebsparametern und den Standardparametern festgestellt werden können. Es ist ferner ein Logikmodul vorgesehen, mit dem die Kompatibilität anhand der festgestellten Abweichungen ermittelt werden kann.

Die Anordnung kann ferner einen Parkmaster umfassen, an den eine Mehrzahl von Windenergieanlagen angeschlossen ist. Wenn die Recheneinheit am Parkmaster angeordnet ist, so hat dies den Vorteil, dass nur eine einzige Recheneinheit für eine Mehrzahl von Windenergieanlagen erforderlich ist. Alternativ kann auch jede einzelne Windenergieanlage mit einer Recheneinheit ausgestattet sein.

Der Parkmaster kann eine Kontrolleinheit umfassen, die die Recheneinheit steuert. Mit der Kontrolleinheit kann die Recheneinheit so gesteuert werden, dass sie nacheinander oder parallel für eine Mehrzahl von Windenergieanlagen Abweichungen zwischen den Standardparametern und den Betriebsparametern feststellt. Die Kontrolleinheit kann ferner dazu ausgelegt sein, eine neue Version der Steuerungssoftware an die Windenergieanlagen zu übertragen, wenn die Kompatibilitätsprüfung positiv ausgefallen ist. Ferner kann sie dazu ausgelegt sein, anhand der Betriebsparamter aus einer Mehrzahl von Versionen eine passende Version der Steuerungssoftware auszuwählen und auf die Windenergieanlagen zu übertragen.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine Anordnung zum Feststellen der Kompatibilität und Erneuern der Steuerungssoftware bei einer Windenergieanlage;
- Fig. 2:: eine Anordnung zum Feststellen der Kompatibilität und Erneuern der Steuerungssoftware bei einer Mehrzahl von Windenergieanlagen;
- Fig. 3:: ein Ablaufdiagramm eines Verfahrens zum Feststellen der Kompatibilität und Erneuern der Steuerungssoftware bei einer Windenergieanlage; und

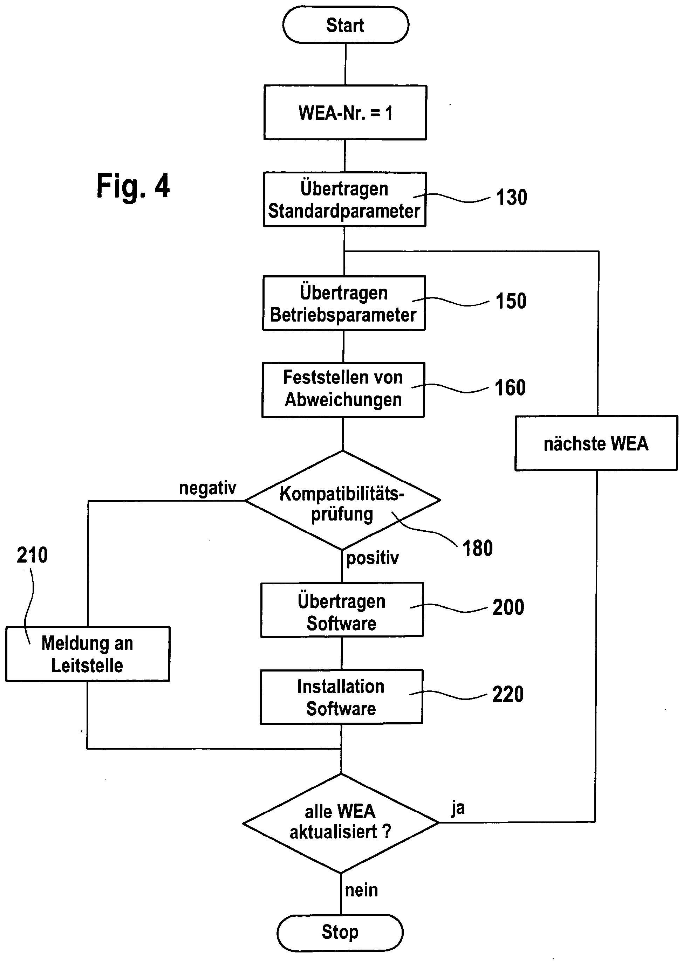

- Fig. 4:: ein Ablaufdiagramm eines Verfahrens zum Feststellen der Kompatibilität und Erneuern der Steuerungssoftware bei einer Mehrzahl von Windenergieanlagen.

Eine Windenergieanlage 20 wird mit einer Steuerungssoftware betrieben, die die Abläufe innerhalb der Windenergieanlage sowie das Zusammenspiel der Windenergieanlage mit dem Anschlussnetz steuert. Die Eigenschaften der Windenergieanlage 20 spiegeln sich in einer Vielzahl von Betriebsparametern wider. Die nachfolgende Liste gibt beispielhaft eine Auswahl von Betriebsparametern einer Windenergieanlage an:

| Typenkennung | MM92 |
|---|---|
| Seriennummer | 123456789 |
| elektrische Leistung | 2000kW |
| Rotordurchmesser | 92m |
| Getriebetyp | Typ G2 |
| Übersetzungsverhältnis | 1:120 |
| Nabenhöhe | 80m |
| Höhe über Meeresspiegel | 1080m |
| Umrichtertyp | Typ U5 |
| Nennleistung des Umrichters | 400kW |
| eingestellter Leistungsfaktor | 0,98 |
| Typ des Controllers | Typ C3 |
| aktuelle Softwarenummer | V 3.205 |

Beim Getriebe vom Typ G2 kann das Problem bestehen, dass es bei einer bestimmten Drehzahl und einem bestimmten Drehmoment anfällig für Schwingungen ist. In der Steuerungssoftware ist dieses Problem dadurch berücksichtigt, dass die Windenergieanlage 20 bei dem betreffenden Drehmoment entweder mit einer etwas höheren oder mit einer etwas niedrigeren Drehzahl betrieben wird. Auf vergleichbare Weise sind auch die übrigen Betriebsparameter für die Eigenschaften der Windenergieanlage 20 relevant.

Die Steuerungssoftware der Windenergieanlage 20 wird laufend weiter entwickelt. Beispielsweise kann die Entwicklungsabteilung die Aufgabe haben, die Steuerungssoftware dahingehend zu überarbeiten, dass sich das Netzanschlussverhalten der Windenergieanlage leicht ändert. Der Entwicklungsabteilung ist es bekannt, dass Windenergieanlagen vom Typ MM normalerweise mit einem der Getriebetypen G1, G2, G3 oder G4 ausgerüstet sind. Da die beabsichtigte Änderung des Netzanschlussverhaltens keinen Einfluss auf das Schwingungsverhalten des Getriebes hat, kann die Entwicklungsabteilung ohne Schwierigkeiten die Aussage treffen, dass die neue Version der Steuerungssoftware mit allen Getriebetypen G1, G2, G3 und G4 kompatibel ist. Die Getriebetypen G1, G2, G3 und G4 entsprechen also Standardparametern der neuen Version der Software.

Noch weitergehend ist es bei dieser Überarbeitung der Steuerungssoftware sogar ganz ohne Belang, welcher Getriebetyp in der Windenergieanlage eingesetzt ist. Sollte also irgendwo eine einzelne Windenergieanlage vom Typ MM in Betrieb sein, die versuchsweise mit einem Getriebe G5 ausgerüstet ist, so kann die Steuerungssoftware trotzdem aufgespielt werden. Der Entwicklungsabteilung ist also bekannt, dass eine Abweichung beim Standardparameter "Getriebetyp" keinen Einfluss auf die Kompatibilität hat, und ordnet diesem Standardparameter eine entsprechende Kompatibilitätsklasse zu. Eine Möglichkeit wäre es, die Kompatibilitätsklasse 0 zu wählen, so dass die Steuerungssoftware ohne Rücksprache aufgespielt werden kann. Alternativ kommt die Kompatibilitätsklasse 1 in Betracht, in der die Steuerungssoftware ebenfalls ohne Rücksprache aufgespielt wird, in der jedoch eine Meldung an die Leitstelle erfolgt.

Eine von der Entwicklungsabteilung erstellte Liste von Standardparametern und zugehörigen Kompatibilitätsklassen könnte beispielsweise folgende Gestalt haben:

| Standardparameter | Wert | Komp-klasse: |
|---|---|---|
| Typenkennung | MM92, MM82 | 3 |
| Seriennummer | 12345000 - 12345999 | 3 |
| elektrische Leistung | 1500-2500kW | 0 |
| Rotordurchmesser | 92m, 82m | 1 |
| Getriebetyp | Typ G1, G2, G3, G4 | 1 |
| Übersetzungsverhältnis | 1:120 | 0 |
| Nabenhöhe | 68-100m | 2 |
| Höhe über Meeresspiegel | 0 - 1000m | 1 |
| Umrichtertype | Typ U1, U5 | 3 |
| Nennleistung des Umrichters | 400kW | 1 |
| eingestellter Leistungsfaktor | 1-0, 90 | 0 |
| Typ des Controllers | Typ C2, C3 | 3 |
| aktuelle Softwarenummer | V 3.1 - 3.21 | 3 |

Die Kompatibilitätsklassen haben die folgende Bedeutung:

| Kompatibilitätsklasse | Bedeutung |
|---|---|
| 0 | Irrelevant für Kompatibilität |
| 1 | Irrelevant für Kompatibilität, jedoch Meldung an Leitstelle erforderlich |
| 2 | Wahrscheinlich relevant für Kompatibilität, Software kann nur mit Zustimmung der Leitstelle aufgespielt werden |
| 3 | Ausschlusskriterium, Software kann nicht aufgespielt werden |

Die Kompatibilitätsklasse wird immer dann relevant, wenn eine Abweichung zwischen Betriebsparametern und Standardparametern festgestellt wurde. Anhand der Kompatibilitätsklasse kann automatisch entschieden werden, ob die neue Version der Steuerungssoftware trotz der Abweichung aufgespielt werden kann oder welche Reaktion erforderlich ist.

In diesem Beispiel steht die Windenergieanlage 1080 m über dem Meeresspiegel, während die Steuerungssoftware für einen Standardparameterbereich von 0 m bis 1000 m ausgelegt ist. Diese Abweichung betrifft einen Standardparameter der Kompatibilitätsklasse 1. Die Steuerungssoftware kann also trotz der Abweichung ohne Rückfrage aufgespielt werden, es ist jedoch eine Meldung an die Leitstelle erforderlich.

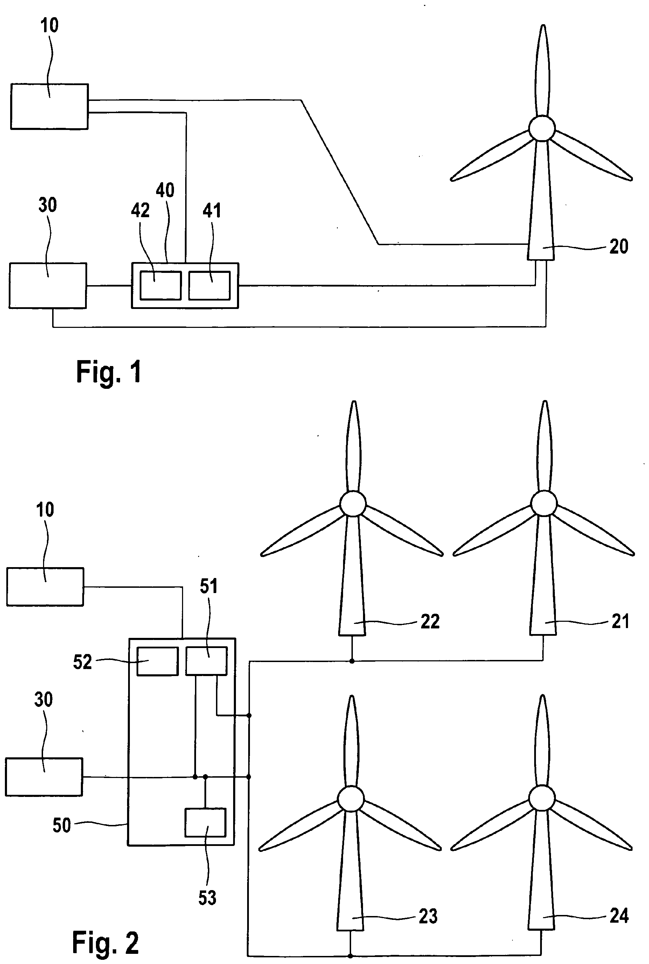

Fig. 1 zeigt eine zur Durchführung des erfindungsgemäßen Verfahrens ausgelegte Anordnung. Eine Windenergieanlage 20 ist mit einer Leitstelle 10 und mit einem Server 30 verbunden. Auf dem Server 30 ist eine neue Version der Steuerungssoftware mit den zugehörigen Standardparametern gespeichert. Es sind ferner eine Recheneinheit 41 und ein Logikmodul 42 vorgesehen, die in einer gemeinsamen Einheit 40 angeordnet sind. Die Einheit 40 ist mit der Leitstelle 10, dem Server 30 und der Windenergieanlage 20 verbunden.

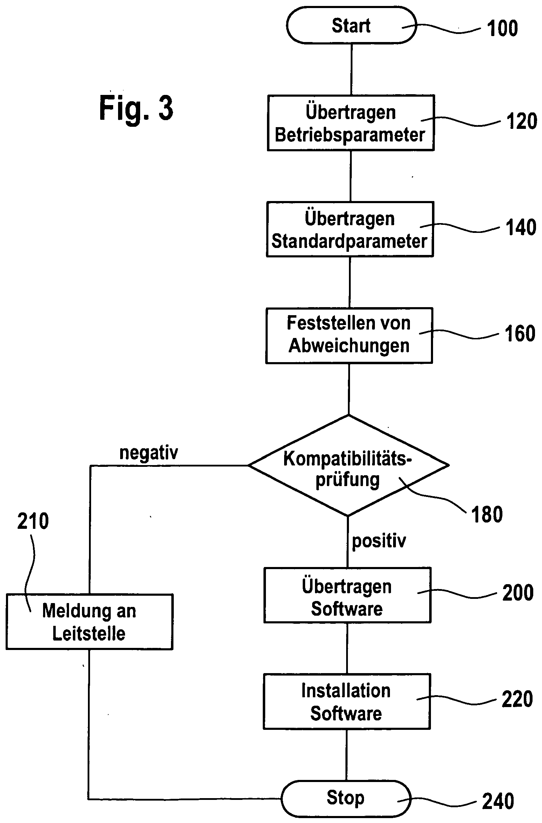

Zum Feststellen der Kompatibilität und Erneuern der Steuerungssoftware wird gemäß dem in Fig. 3 gezeigten Ablauf zunächst ein Befehl von der Leitstelle 10 an die Windenergieanlage 20 übermittelt, die Betriebsparameter zu sichern und für eine Übertragung vorzubereiten. In Schritt 120 werden daraufhin die Betriebsparameter von der Windenergieanlage 20 zu der Recheneinheit 41 übertragen. Anschließend werden in Schritt 140 die zu der neuen Version der Steuerungssoftware gehörigen Standardparameter von dem Server 30 zu der Recheneinheit 41 übertragen. Die Recheneinheit 41 vergleicht die Betriebsparameter mit den Standardparametern und stellt Abweichungen fest (Schritt 160).

Das Logikmodul 42 führt in Schritt 180 anhand der festgestellten Abweichungen eine Kompatibilitätsprüfung durch. Die Kompatibilitätsprüfung fällt positiv aus, wenn es keine Abweichung zwischen Betriebsparametern und Standardparametern gibt oder wenn zwar Abweichungen zwischen Betriebsparametern und Standardparametern festgestellt wurden, die Abweichungen aber Standardparameter der Kompatibilitätsklassen 0 oder 1 betreffen. Die neue Version der Steuerungssoftware wird in Schritt 200 zu der Windenergieanlage 20 übertragen und in Schritt 220 auf der Windenergieanlage 20 installiert. Bei einer Abweichung eines Standardparameters der Kompatibilitätsklasse 1 ergeht parallel eine Meldung an die Leitstelle. Die Windenergieanlage 20 wird mit der neuen Version der Steuerungssoftware in Betrieb genommen. Die Windenergieanlage 20 kann in Betrieb gehalten werden, während die neue Version der Software installiert wird.

Betrifft die in Schritt 160 festgestellte Abweichung einen Standardparameter der Kompatibilitätsklasse 2 oder 3, kann die neue Version der Steuerungssoftware nicht ohne weiteres aufgespielt werden. In Kompatibilitätsklasse 2 ist ein ausdrückliches Kommando von der Leitstelle 10 erforderlich, damit die Steuerungssoftware trotz der Abweichung aufgespielt werden kann. Betrifft die Abweichung einen Standardparameter der Kompatibilitätsklasse 3, so ist die Abweichung so gravierend, dass die Steuerungssoftware nicht aufgespielt werden kann.

Die Anordnung gemäß Fig. 2 ist dazu ausgelegt, bei einer Mehrzahl von Windenergieanlagen 21, 22, 23, 24 die Kompatibilität der Steuerungssoftware zu überprüfen. Es ist ein Parkmaster 50 vorgesehen, an den die Mehrzahl von Windenergieanlagen 21, 22, 23, 24 angeschlossen ist. Der Parkmaster 50 umfasst eine Recheneinheit 51, ein Logikmodul 52 und eine Kontrolleinheit 53. Auf ein Kommando der Leitstelle 10 werden in Schritt 130 die Standardparameter von dem Server 30 zu dem Parkmaster 50 übertragen. Die Kontrolleinheit 53 steuert eine erste der Windenergieanlagen 21, 22, 23, 24 an und lässt die Betriebsparameter der betreffenden Windenergieanlage, beispielsweise der Windenergieanlage 21, in Schritt 150 zu dem Parkmaster 50 übertragen. Die Recheneinheit 51 im Parkmaster 50 vergleicht die Betriebsparameter mit den Standardparametern und stellt die Abweichungen fest, Schritt 160. Führt die in Schritt 180 durchgeführte Kompatibilitätsprüfung zu einem positiven Ergebnis, wird die neue Version der Steuerungssoftware in Schritt 200 zu der Windenergieanlage 21 übertragen und in Schritt 220 auf der Windenergieanlage 21 installiert. Es ist nicht erforderlich, die Windenergieanlage 21 in dieser Zeit außer Betrieb zu setzen. Die Schritte des Überprüfens der Kompatibilität und des Erneuerns der Steuerungssoftware werden von der Kontrolleinheit 53 geleitet, ein Eingreifen von der Leitstelle 10 aus ist nicht erforderlich. Eine Meldung an die Leitstelle erfolgt in Schritt 210 lediglich dann, wenn eine Abweichung bei einem Standardparameter aus einer der Kompatibilitätsklassen 1 bis 3 festgestellt wurde.

Ist das Verfahren bei der Windenergieanlage 21 abgeschlossen, werden die entsprechenden Schritte unter der Leitung der Kontrolleinheit 53 nacheinander bei den Windenergieanlagen 22, 23, 24 durchgeführt. Das Verfahren wird abgeschlossen, wenn alle Windenergieanlagen des Windparks angesteuert wurden und entweder die neue Version der Steuerungssoftware aufgespielt ist oder die Kompatibilitätsprüfung negativ ausgefallen ist.

## Patentansprüche

1. Verfahren zum automatischen Feststellen der Kompatibilität einer für Standardparameter ausgelegten Steuerungssoftware mit einer mit Betriebsparametern betriebenen Windenergieanlage (21, 22, 23, 24), umfassend die folgenden Schritte:
a. Übertragen der Betriebsparameter der Windenergieanlage zu einer Recheneinheit (Schritt 120);
b. Übertragen der Standardparameter zu einer Recheneinheit (Schritt 140);
c. Feststellen von Abweichungen zwischen den Betriebsparametern und den Standardparametern durch die Recheneinheit (Schritt 160);
d. Entscheiden über die Kompatibilität anhand der Abweichungen (Schritt 180);

2. Verfahren nach Anspruch 1, **dadurch gekennzeichnet, dass** den Standardparametern Kompatibilitätsklassen zugeordnet werden und dass bei einer Abweichung zwischen Betriebsparametern und Standardparametern anhand der Kompatibilitätsklassen über die Kompatibilität entschieden wird.

3. Verfahren nach Anspruch 1 oder 2, **dadurch gekennzeichnet, dass** die Entscheidung über die Kompatibilität durch ein Logikmodul (42, 52) getroffen wird.

4. Verfahren zum automatischen Erneuern der Steuerungssoftware einer Windenergieanlage (20) mit den folgenden Schritten:
a. Feststellen der Kompatibilität einer neuen Version der Steuerungssoftware mit der Windenergieanlage (20) gemäß einem der Ansprüche 1 bis 3 (Schritte 120, 140, 160, 180);
b. Übertragen der neuen Version der Steuerungssoftware zu der Windenergieanlage (20) bei positivem Ergebnis der Kompatibilitätsprüfung (Schritt 200);
c. Inbetriebnehmen der Windenergieanlage (20) mit der übertragenen Steuerungssoftware (Schritt 220).

5. Verfahren nach Anspruch 4, **dadurch gekennzeichnet, dass** die Windenergieanlage (20) in Betrieb gehalten wird, während die neue Version der Steuerungssoftware zu der Windenergieanlage (20) übertragen wird.

6. Verfahren nach Anspruch 4 oder 5, **dadurch gekennzeichnet, dass** die Windenergieanlage (20) während des Umschaltens auf eine neue Version der Steuerungssoftware in Betrieb gehalten wird.

7. Verfahren nach einem der Ansprüche 4 bis 6, **dadurch gekennzeichnet, dass** das Inbetriebnehmen mit der übertragenen Steuerungssoftware (Schritt 220) verzögert wird, bis die Windgeschwindigkeit unterhalb eines vorgegebenen Grenzwerts liegt.

8. Verfahren nach einem der Ansprüche 4 bis 7, **dadurch gekennzeichnet, dass** die Windenergieanlage (20) zu einem Zeitpunkt mit der übertragenen Steuerungssoftware in Betrieb genommen wird, zu dem keine Energie in das Anschlussnetz eingespeist wird.

9. Verfahren zum automatischen Erneuern der Steuerungssoftware einer Mehrzahl von an einen Parkmaster (50) angeschlossenen Windenergieanlagen (21, 22, 23, 24), umfassend die Schritte:
a. Übertragen der Standardparameter und einer neuen Version der Steuerungssoftware an den Parkmaster (Schritt 140);
b. Feststellen der Kompatibilität der neuen Version der Steuerungssoftware mit der Mehrzahl von Windenergieanlage gemäß einem der Ansprüche 1 bis 4, wobei die Windenergieanlagen (21, 22, 23, 24) von dem Parkmaster angesteuert (50) werden;
c. Übertragen der neuen Version der Steuerungssoftware zu den Windenergieanlagen, bei denen die Kompatibilitätsprüfung zu einem positiven Ergebnis geführt hat (Schritt 200), wobei der Parkmaster (50) die Übertragung steuert;
d. Inbetriebnehmen der Windenergieanlagen (21, 22, 23, 24) mit der neuen Version der Steuerungssoftware (Schritt 220).

10. Anordnung zum automatischen Feststellen der Kompatibilität einer für Standardparameter ausgelegten Steuerungssoftware mit einer mit Betriebsparametern betriebenen Windenergieanlage (20) gemäss Anspruch 1, umfassend eine Recheneinheit (41, 51) zum Feststellen von Abweichungen zwischen den Betriebsparametern und den Standardparametern und ein Logikmodul (42, 52) zum Ermitteln der Kompatibilität anhand der festgestellten Abweichungen.

11. Anordnung nach Anspruch 10, **dadurch gekennzeichnet, dass** sie ferner einen Parkmaster (50) umfasst, an den eine Mehrzahl von Windenergieanlagen (21, 22, 23, 24) angeschlossen ist, und dass die Recheneinheit (51) am Parkmaster (50) angeordnet ist.

12. Anordnung nach Anspruch 11, **dadurch gekennzeichnet, dass** der Parkmaster (50) eine Kontrolleinheit (53) umfasst, die dazu ausgelegt ist, die Recheneinheit (51) so zu steuern, dass Abweichungen zwischen den Standardparametern und den Betriebsparametern einer Mehrzahl von Windenergieanlagen (21, 22, 23, 24) festgestellt werden.

13. Anordnung nach Anspruch 12, **dadurch gekennzeichnet, dass** die Kontrolleinheit (53) dazu ausgelegt ist, eigenständig eine neue Version der Steuerungssoftware zu den Windenergieanlagen (21, 22, 23, 24) zu übertragen, bei denen die Kompatibilitätsprüfung positiv ausgefallen ist.

14. Anordnung nach einem der Ansprüche 10 bis 13, **dadurch gekennzeichnet, dass** sie eine Steuereinheit für die Windenergieanlage (20) mit zwei voneinander getrennten Speicherbereichen umfasst und dass die zwei Speicherbereiche für unterschiedliche Versionen der Steuerungssoftware ausgelegt sind.

15. Anordnung nach Anspruch 14, **dadurch gekennzeichnet, dass** sie ein Umschaltmodul umfasst und dass das Umschaltmodul dazu ausgelegt ist, den Betrieb der Windenergieanlage (20) von einer in einem ersten Speicherbereich gespeicherten Version der Steuerungssoftware auf eine in einem zweiten Speicherbereich gespeicherten Version der Steuerungssoftware umzuschalten.

## Claims

1. Method for automatic determination of the compatibility of control software, which is designed for standard parameters, with a wind energy installation (21, 22, 23, 24) which is operated using operating parameters, comprising the following steps:
a. transmission of the operating parameters of the wind energy installation to a computation unit (step 120);
b. transmission of the standard parameters to a computation unit (step 140);
c. determination of discrepancies between the operating parameters and the standard parameters by the computation unit (step 160) ;
d. decision on compatibility on the basis of the discrepancies (step 180).

2. Method according to Claim 1, **characterized in that** the standard parameters are associated with compatibility classes, and **in that**, in the event of any discrepancy between operating parameters and standard parameters, the decision on compatibility is made on the basis of the compatibility classes.

3. Method according to Claim 1 or 2, **characterized in that** the decision on compatibility is made by a logic module (42, 52).

4. Method for automatic updating of the control software of a wind energy installation (20) having the following steps:
a. determination of the compatibility of a new version of the control software with the wind energy installation (20) according to one of Claims 1 to 3 (steps 120, 140, 160, 180);
b. transmission of the new version of the control software to the wind energy installation (20) if the result of the compatibility test (step 200) is positive;
c. starting up the wind energy installation (20) with the transmitted control software (step 220).

5. Method according to Claim 4, **characterized in that** the wind energy installation (20) is kept in operation while the new version of the control software is transmitted to the wind energy installation (20).

6. Method according to Claim 4 or 5, **characterized in that** the wind energy installation (20) is kept in operation while switching to a new version of the control software.

7. Method according to one of Claims 4 to 6, **characterized in that** the process of starting up with the transmitted control software (step 220) is delayed until the wind speed is below a predetermined limit value.

8. Method according to one of Claims 4 to 7, **characterized in that** the wind energy installation (20) is taken into operation with the transmitted control software at a time at which no power is being fed into the connecting grid system.

9. Method for automatic updating of the control software of a plurality of wind energy installations (21, 22, 23, 24) which are connected to a farm master (50), comprising the following steps:
a. transmission of the standard parameters and of a new version of the control software to the farm master (step 140);
b. determination of the compatibility of the new version of the control software with the plurality of wind energy installations according to one of Claims 1 to 4, with the wind energy installations (21, 22, 23, 24) being operated by the farm master (50) ;
c. transmission of the new version of the control software to the wind energy installations in which the compatibility test has led to a positive result (step 200), with the farm master (50) controlling the transmission;
d. starting up the wind energy installations (21, 22, 23, 24) with the new version of the control software (step 220).

10. Arrangement for automatic determination of the compatibility of control software, which is designed for standard parameters, with a wind energy installation (20) according to Claim 1 which is operated using operating parameters, comprising a computation unit (41, 51) for determination of discrepancies between the operating parameters and the standard parameters, and a logic module (42, 52) for determining the compatibility on the basis of the determined discrepancies.

11. Arrangement according to Claim 10, **characterized in that** the arrangement also comprises a farm master (50) to which a plurality of wind energy installations (21, 22, 23, 24) are connected, and **in that** the computation unit (51) is arranged at the farm master (50).

12. Arrangement according to Claim 11, **characterized in that** the farm master (50) has a monitoring unit (53) which is designed to control the computation unit (51) such that discrepancies between the standard parameters and the operating parameters of a plurality of wind energy installations (21, 22, 23, 24) are determined.

13. Arrangement according to Claim 12, **characterized in that** the monitoring unit (53) is designed to autonomously transmit a new version of the control software to the wind energy installations (21, 22, 23, 24) in which the compatibility test has had a positive result.

14. Arrangement according to one of Claims 10 to 13, **characterized in that** the arrangement has a control unit for the wind energy installation (20), with two memory areas which are separated from one another, and **in that** the two memory areas are designed for different versions of the control software.

15. Arrangement according to Claim 14, **characterized in that** the arrangement has a switching module and **in that** the switching module is designed to switch the operation of the wind energy installation (20) from a version of the control software which is stored in a first memory area to a version of the control software which is stored in a second memory area.

## Revendications

1. Procédé de constatation automatique de la compatibilité d'un logiciel de commande conçu pour des paramètres par défaut avec un aérogénérateur (21, 22, 23, 24) fonctionnant avec des paramètres de fonctionnement, comprenant les étapes suivantes :
a. transmission des paramètres de fonctionnement de l'aérogénérateur à une unité de calcul (étape 120) ;
b. transmission des paramètres par défaut à une unité de calcul (étape 140) ;
c. constatation d'écarts entre les paramètres de fonctionnement et les paramètres par défaut par l'unité de calcul (étape 160) ;
d. décision à propos de la compatibilité au moyen des écarts (étape 180).

2. Procédé selon la revendication 1, **caractérisé en ce que** des classes de compatibilité sont associées aux paramètres par défaut et **en ce qu'**en présence d'un écart entre les paramètres de fonctionnement et les paramètres par défaut, la décision à propos de la compatibilité est prise au moyen des classes de compatibilité.

3. Procédé selon la revendication 1 ou 2, **caractérisé en ce que** la décision à propos de la compatibilité est prise par un module logique (42, 52).

4. Procédé de renouvellement automatique du logiciel de commande d'un aérogénérateur (20), comprenant les étapes suivantes :
a. constatation de la compatibilité d'une nouvelle version du logiciel de commande avec l'aérogénérateur (20) conformément à l'une des revendications 1 à 3 (étapes 120, 140, 160, 180) ;
b. transmission de la nouvelle version du logiciel de commande à l'aérogénérateur (20) dans le cas d'un résultat positif du contrôle de la compatibilité (étape 200) ;
c. mise en service de l'aérogénérateur (20) avec le logiciel de commande transmis (étape 220).

5. Procédé selon la revendication 4, **caractérisé en ce que** l'aérogénérateur (20) est maintenu en service pendant que la nouvelle version du logiciel de commande est transmise à l'aérogénérateur (20).

6. Procédé selon la revendication 4 ou 5, **caractérisé en ce que** l'aérogénérateur (20) est maintenu en service pendant le basculement sur une nouvelle version du logiciel de commande.

7. Procédé selon l'une des revendications 4 à 6, **caractérisé en ce que** la mise en service avec le logiciel de commande transmis (étape 220) est retardée jusqu'à ce que la vitesse du vent soit inférieure à une valeur limite prédéfinie.

8. Procédé selon l'une des revendications 4 à 7, **caractérisé en ce que** l'aérogénérateur (20) est mis en service avec le logiciel de commande transmis à un instant auquel aucune énergie n'est injectée dans le réseau de raccordement.

9. Procédé de renouvellement automatique du logiciel de commande d'une pluralité d'aérogénérateurs (21, 22, 23, 24) raccordés à un maître de parc (50), comprenant les étapes suivantes :
a. transmission des paramètres par défaut et d'une nouvelle version du logiciel de commande au maître de parc (étape 140) ;
b. constatation de la compatibilité de la nouvelle version du logiciel de commande avec la pluralité d'aérogénérateurs conformément à l'une des revendications 1 à 4, les aérogénérateurs (21, 22, 23, 24) étant commandés par le maître de parc (50) ;
c. transmission de la nouvelle version du logiciel de commande aux aérogénérateurs pour lesquels le contrôle de la compatibilité a donné lieu à un résultat positif (étape 200), le maître de parc (50) commandant la transmission ;
d. mise en service des aérogénérateurs (21, 22, 23, 24) avec la nouvelle version du logiciel de commande (étape 220).

10. Arrangement de constatation automatique de la compatibilité d'un logiciel de commande conçu pour des paramètres par défaut avec un aérogénérateur (20) fonctionnant avec des paramètres de fonctionnement selon la revendication 1, comprenant une unité de calcul (41, 51) destinée à déterminer des écarts entre les paramètres de fonctionnement et les paramètres par défaut et un module logique (42, 52) destiné à déterminer la compatibilité au moyen des écarts constatés.

11. Arrangement selon la revendication 10, **caractérisé en ce qu'**il comprend en outre un maître de parc (50) auquel sont raccordés une pluralité d'aérogénérateurs (21, 22, 23, 24), et **en ce que** l'unité de calcul (51) est disposée sur le maître de parc (50).

12. Arrangement selon la revendication 11, **caractérisé en ce que** le maître de parc (50) comprend une unité de contrôle (53) qui est conçue pour commander l'unité de calcul (51) de telle sorte que les écarts entre les paramètres de fonctionnement et les paramètres par défaut d'une pluralité d'aérogénérateurs (21, 22, 23, 24) sont constatés.

13. Arrangement selon la revendication 12, **caractérisé en ce que** l'unité de contrôle (53) est conçue pour transmettre de manière autonome une nouvelle version du logiciel de commande aux aérogénérateurs (21, 22, 23, 24) au niveau desquels le contrôle de compatibilité s'est avéré positif.

14. Arrangement selon l'une des revendications 10 à 13, **caractérisé en ce qu'**il comprend une unité de commande pour l'aérogénérateur (20) avec deux zones de mémoire séparées l'une de l'autre et **en ce que** les deux zones de mémoire sont conçues pour des versions différentes du logiciel de commande.

15. Arrangement selon la revendication 14, **caractérisé en ce qu'**il comprend un module de permutation et **en ce que** le module de permutation est conçu pour permuter le fonctionnement de l'aérogénérateur (20) d'une version du logiciel de commande enregistrée dans une première zone de mémoire sur une version du logiciel de commande enregistrée dans une deuxième zone de mémoire.
